# EUROPEAN PATENT APPLICATION

(11) **EP 4 668 685 A1**
(43) Date of publication of application: **24.12.2025**
(21) Application number: 24733836.1
(22) Date of filing: 15.02.2024
(51) Int. Cl.: H04L 27/26, H04L 27/02, H04W 52/02

(54) **METHOD AND APPARATUS FOR TRANSMITTING AND RECEIVING SIGNALS IN WIRELESS COMMUNICATION SYSTEM**

(30) Priority: 16.02.2023 US 202363446333 P; 14.05.2023 US 202363466343 P
(71) Applicant: LG Electronics Inc., Seoul 07336 (KR)
(72) Inventor: CHOI, Seunghwan, Seoul 06772 (KR); KIM, Jaehyung, Seoul 06772 (KR); YANG, Suckchel, Seoul 06772 (KR); KIM, Seonwook, Seoul 06772 (KR)
(74) Representative: Plasseraud IP
(86) International application number: PCT/KR2024/095231
(87) International publication number: WO 2024/172566

(57) **Abstract**

The present disclosure provides a method and apparatus for transmitting and receiving signals in a wireless communication system. According to the method and apparatus, a low-power wake-up signal (LP-WUS) may be received through a first receiver, and a second receiver may be triggered based on the reception of the LP-WUS. A length L_w of an on-off keying (OOK) symbol of the LP-WUS is determined based on (i) a length N_ofdm of an orthogonal frequency division multiplexing (OFDM) symbol, (ii) a length N_cp of a cyclic prefix (CP) duration of the OFDM symbol, and (iii) a number N of OOK symbols corresponding to the length of the OFDM symbol.

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### TECHNICAL PROBLEM

The object of the present disclosure is to provide a signal transmission and reception method for efficiently transmitting and receiving reference signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

The present disclosure provides a method and apparatus for transmitting and receiving a signal in a wireless communication system.

In an aspect of the present disclosure, provided herein is a method of transmitting and receiving signals by a user equipment (UE) in a wireless communication system. The method may include: receiving a low-power wake-up signal (LP-WUS) through a first receiver of the UE; and triggering a second receiver of the UE based on the reception of the LP-WUS. A length L_w of an on-off keying (OOK) symbol of the LP-WUS may be determined based on (i) a length N_ofdm of an orthogonal frequency division multiplexing (OFDM) symbol, (ii) a length N_cp of a cyclic prefix (CP) duration of the OFDM symbol, and (iii) a number N of OOK symbols corresponding to the length of the OFDM symbol.

In another aspect of the present disclosure, provided herein are a UE, a processor, and a storage medium as an apparatus for executing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### ADVANTAGEOUS EFFECTS

According to one embodiment of the present disclosure, when reference signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIGS. 4 to 9 are diagrams illustrating methods for transmitting and receiving a signal according to the embodiments of the present disclosure.
FIGS. 10 to 13 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

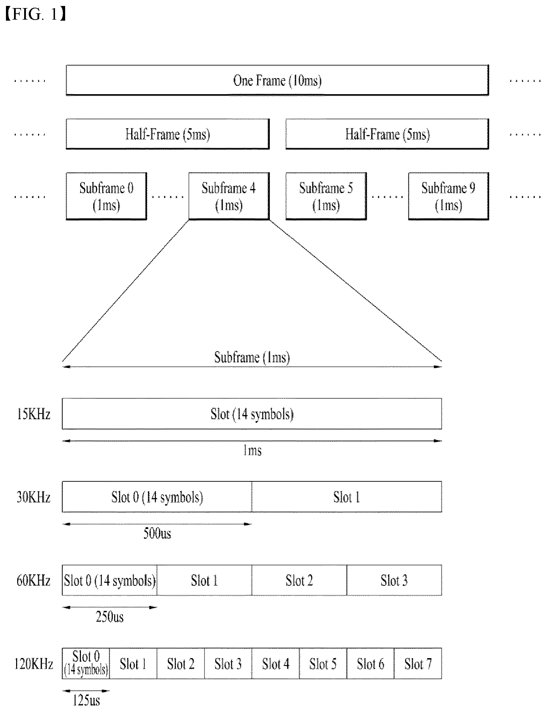

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame.u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

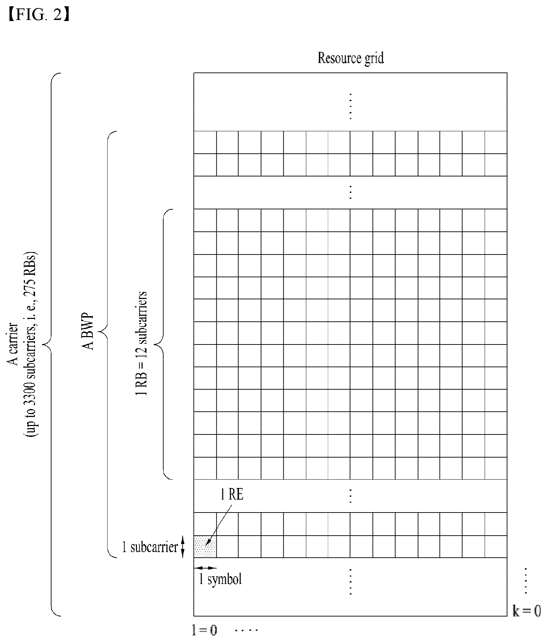

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

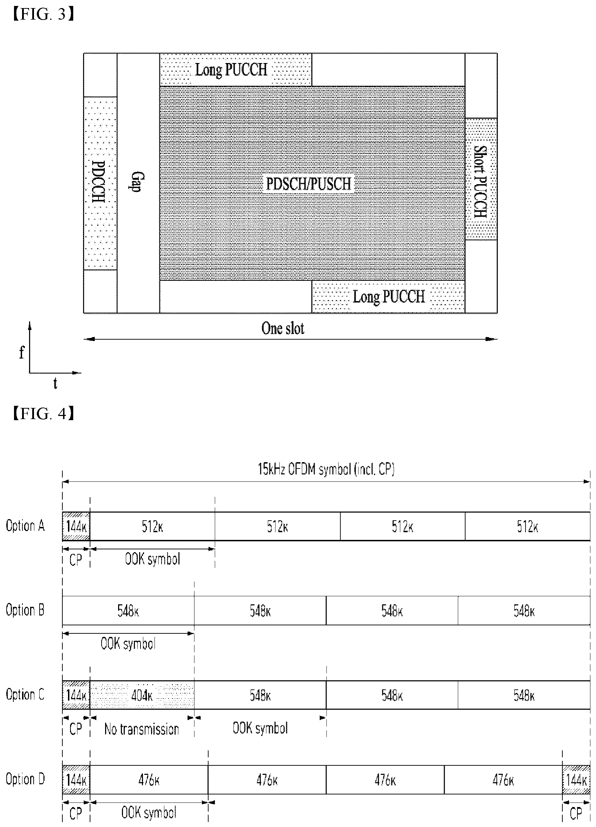

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### LP-WUS (Low-Power Wake-Up Signal)

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

In the Rel-18 NR standard, discussions are ongoing to introduce a low-power wake-up signal (LP-WUS) and a separate receiver capable of receiving such a signal, known as a low-power wake-up receiver or low-power wake-up radio (LP-WUR), as a new power consumption reduction method, which is somewhat different from the power consumption reduction techniques for UEs introduced and supported in Rel-16/17. If a receiver in the UE (DL receiver) of the conventional NR system is referred to as a main radio/receiver (MR), the LP-WUR represents a separate receiver (i.e., companion radio/receiver) capable of being introduced to reduce the power consumption of the MR. The term LP-WUR may be simply referred to as LR.

Table 4 shows a part of the justification in the study item description (SID) for the corresponding discussion item and explains the purpose and background of the introduction of the LP-WUS/WUR.

**[Table 4]**

| |
|---|
| 5G systems are designed and developed targeting for both mobile telephony and vertical use cases. Besides latency, reliability, and availability, UE energy efficiency is also critical to 5G. Currently, 5G devices may have to be recharged per week or day, depending on individual's usage time. In general, 5G devices consume tens of milliwatts in RRC idle/inactive state and hundreds of milliwatts in RRC connected state. Designs to prolong battery life is a necessity for improving energy efficiency as well as for better user experience. |
| Energy efficiency is even more critical for UEs without a continuous energy source, e.g., UEs using small rechargeable and single coin cell batteries. Among vertical use cases, sensors and actuators are deployed extensively for monitoring, measuring, charging, etc. Generally, their batteries are not rechargeable and expected to last at least few years as described in TR 38.875. Wearables include smart watches, rings, eHealth related devices, and medical monitoring devices. With typical battery capacity, it is challenging to sustain up to 1-2 weeks as required. |
| The power consumption depends on the configured length of wake-up periods, e.g., paging cycle. To meet the battery life requirements above, eDRX cycle with large value is expected to be used, resulting in high latency, which is not suitable for such services with requirements of both long battery life and low latency. For example, in fire detection and extinguishment use case, fire shutters shall be closed and fire sprinklers shall be turned on by the actuators within 1 to 2 seconds from the time the fire is detected by sensors, long eDRX cycle cannot meet the delay requirements. eDRX is apparently not suitable for latency-critical use cases. Thus, the intention is to study ultra-low power mechanism that can support low latency in Rel-18, e.g. lower than eDRX latency. |
| Currently, UEs need to periodically wake up once per DRX cycle, which dominates the power consumption in periods with no signalling or data traffic. If UEs are able to wake up only when they are triggered, e.g., paging, power consumption could be dramatically reduced. This can be achieved by using a wake-up signal to trigger the main radio and a |
| separate receiver which has the ability to monitor wake-up signal with ultra-low power consumption. Main radio works for data transmission and reception, which can be turned off or set to deep sleep unless it is turned on. |

The present disclosure proposes methods for generating and configuring waveforms or signal structures that may be used as the LP-WUS. In addition, the present disclosure proposes methods of monitoring the LP-WUS at the LP-WUR, synchronization signals capable of being transmitted for synchronization of the LP-WUR (hereinafter such a synchronization signal is referred to as an LP-SS), and operational methods for the LP-WUS/WUR.

### [1] Introduction

[1-1] In the conventional NR system, the BS generates and transmits OFDM signals for control/data signals. The UE may receive the OFDM signals using a receiver based on coherent detection/demodulation, which requires (relatively) precise synchronization. To this end, radio frequency (RF) modules and baseband modules such as a band-pass filter, fast Fourier transform (FFT), and local oscillator, which consume a lot of power, are required. However, to receive signals with low power at the LP-WUR, a receiver based on non-coherent detection/demodulation, which does not require such power-consuming modules, may be used. Additionally, on-off keying (OOK), frequency shift keying (FSK), and so on may be used in the LP-WUS for the receiver. On the other hand, if an LP-WUS, which is generated in a completely different way from conventional NR signals, is introduced, there may be a burden on network vendors to build transmitters to generate new signals.

[1-2] As one of the methods for transmitting OOK/FSK signals while using the OFDM transmitter of the BS as much as possible, (multi-carrier OOK) MC-OOK or multi-carrier FSK (MC-FSK) signals may be used. For example, the MC-OOK (or MC-FSK) signal may refer to a signal generated using only some of the OFDM subcarriers to create a time-domain waveform similar to the OOK (or FSK) waveform. Accordingly, reception based on non-coherent detection/demodulation may be achieved at the receiver while allowing the (maximal) use of the OFDM transmitter.

The following proposals will be described based on the assumption of the MC-OOK for the sake of convenience in explanation. Unless otherwise specified, the proposed methods described below may be equally applied to (or extended for) the MC-FSK.

[1-3] Assuming that the inverse fast Fourier transform (IFFT) size of the OFDM transmitter is "NFFT" and the subcarrier spacing is "SCS", the (time-domain) length of the time-domain waveform of the MC-OOK generated based on OFDM may be determined by the NFFT and SCS. In addition, different waveforms may be generated depending on the number of subcarriers used for generating the MC-OOK among the total subcarriers as well as the data or sequences modulated on each subcarrier. In the following proposal, a signal with a length of "L_p" obtained from the generated time-domain waveform is referred to as "P_pulse." For example, the P_pulse may be generated through time masking of a portion corresponding to L_p from the time-domain signal generated by the IFFT.

[1-4] For non-coherent detection of OOK signal reception, Manchester coding is often used. In the case of OOK signals, data may be distinguished as "1" (or 'ON') or "0" (or 'OFF') depending on whether the power of the received signal exceeds a threshold. Depending on the receiver (or channel conditions), the threshold configuration may be a complex process. Manchester coding may be understood as a method of adding, for example, transitions from '1' to '0' or '0' to '1' in the middle of an OOK symbol and then representing data as "0" or "1" based on the sequence of the transitions. Alternatively, as another example, during a duration of two OOK symbols, "ON - OFF" may represent data "1", and "OFF - ON" may represent data "0" (or vice versa). In the following proposal, a result of applying Manchester coding to P_pulse will be referred to as "M_pulse." In addition, the term "W_pulse" will be used in the following proposals to collectively refer to both the P_pulse and/or M_pulse (unless otherwise specified). In this case, since the length of the M_ pulse may be either L_p or 2*L_p depending on the method of applying Manchester coding, the length of the W_pulse, "L_w," may also mean either L_p or 2*L_p depending on the context.

[1-5] In the following proposals, the length of an OFDM symbol before the CP is added will be referred to as N_data, and the length of the CP will be referred to as N_cp. The length of an OFDM symbol including the CP (i.e., N_data + N_cp) will be referred to as N_ofdm.

### [2] LP-WUS structure in time domain

[2-1] A single W_pulse may be used to transmit/indicate one bit. In this case, to transmit/indicate N bits, N consecutive W_pulses may be used. Alternatively, X W_pulses may be used to transmit/indicate one bit. To transmit/indicate N bits, X W_pulses would be repeated N times. For the sake of explanation, in the following proposals, it is assumed that one bit is mapped to one W_pulse. However, it is understood by those skilled in the art that the same method is extensively applicable to cases where X W_pulses are mapped to one bit.

[2-2] As described in [1-2], if an MC-OOK signal is generated using only some OFDM subcarriers, the remaining subcarriers (not in use) may be used for other purposes. For example, among NFFT subcarriers, only K subcarriers may be used for generating the LP-WUS, while the remaining 'NFFT - K' subcarriers may be allocated for other signals/channels of the MR. Therefore, the LP-WUS may be transmitted during the same time period as the OFDM symbols for a signal/channel of the MR (that is, the signals may be FDMed), which is an efficient way to use frequency resources. In this case, to avoid interference between the signal/channel of the MR and the LP-WUS, the LP-WUS may be generated with a CP-OFDM structure similar to the OFDM waveform of the MR (where the CP-OFDM structure means that the last N_cp duration of the N_data duration is added as a CP in front of the N_data duration and thus the first N_cp duration and the last N_cp duration of an OFDM symbol with a length of N_ofdm are the same).

[2-3] To this end, one of the following methods may be used to define/configure the length of the W-pulse. In the explanation below, a time duration during which N bits are transmitted via the LP-WUS is assumed to be the time duration of one OFDM symbol of the MR.
- Method 1: To transmit N bits via the LP-WUS during N_data of the OFDM symbol of the MR, the length L_w of the W_pulse may be defined/configured as the value of N_data divided by N, that is, 'N_data / N'. Option A in FIG. 4 represents an example of Method 1.
- Method 2: To transmit N bits via the LP-WUS during the length of (N_data - N_cp) of the OFDM symbol of the MR, the length L_w of the W_pulse may be defined/configured as (N_data - N_cp) divided by N, that is, '(N_data - N_cp) / N'. Option D in FIG. 4 represents an example of Method 2.
- Method 3: To transmit N bits via the LP-WUS during the length of (N_data + N_cp) of the OFDM symbol of MR, the length L_w of the W_pulse may be defined/configured as (N_data + N_cp) divided by N, that is, '(N_data + N_cp ) / N'. Option C in FIG. 4 represents an example of Method 3.
- Method 4: To transmit N bits via the LP-WUS during the length N_ofdm of the OFDM symbol of the MR, the length L_w of the W_pulse may be defined/configured as N_ofdm divided by N, that is, N_ofdm / N. Option B in FIG. 4 represents an example of Method 4. Referring to Option B, there may be no CP duration in the LP-WUS.

Method 1 is a method of generating N consecutive W_pulses during the N_data duration of the OFDM symbol of the MR (similar to the conventional CP-OFDM configuration method), attaching the last N_cp duration in front of N_data, and multiplexing the N consecutive W_pulses with the OFDM symbol of the MR. The LR may perform a series of reception processes, such as envelope detection, for the N_data duration of the received LP-WUS, except for the N_cp duration of the MR.

Method 2 is a method of generating N consecutive LP-WUS pulses for the first (N_data - N_cp) length of the N_data duration of the MR. The LR may perform a series of reception processes, such as envelope detection, for the remaining duration of the received LP-WUS, except for the N_cp duration of the MR and the last N_cp duration of N_data. This method is expected to have a relatively lower data rate compared to Method 1 because the N_cp duration is not used for LP-WUS data transmission for every N_ofdm.

Method 3 is a method of generating N consecutive W_pulses during the (N_data + N_cp) length of the OFDM symbol of the MR. However, in this case, the CP relationship may no longer be maintained in symbols obtained by combining the OFDM symbol of MR and the LP-WUS. This may cause degradation in the reception performance. To avoid this, the payload of the LP-WUS may be transmitted only in the (N_data + N_cp - X) portion of the (N_data + N_cp) length excluding the first "X" length. In this case, X may be a multiple of the minimum value of L_w that is not smaller than N_cp. The LR may perform a series of reception processes, such as envelope detection, for the remaining duration of the received LP-WUS except for the first X portion.

In Methods 1/2/3, N_data, N_cp, L_w, and so on may be considered in terms of OFDM samples instead of time units. In this case, if the division result is not an integer, L_w may be determined as an integer number of samples by applying the following functions: floor( ), ceil( ), or round( ).

[2-4] The length of the W_pulse may be defined based on one OFDM symbol as in Section [2-3] above, but the length of the W_pulse may be defined/configured based on a larger specific time duration. When N bits are transmitted via the LP-WUS during a specific time duration (indicated by D), the length L_w of the W_pulse may be defined/configured as the value of D divided by N, i.e., 'D / N,' where D may be 0.5 ms or multiples thereof. Accordingly, when a MR waveform has a long CP every 0.5 ms, if the LR performs envelope detection on the received LP-WUS, the LP may not need to exclude the CP duration that varies every 0.5 ms. If the LP-WUS is received based on the W_pulse determined in this way, for all CP durations within the D duration of the received LP-WUS, the LR may perform a series of reception processes, such as envelope detection, only on durations except for all LP-WUS pulses that overlap with the CP.

If the length L_w is determined to be the length of an OOK symbol, actual LP-WUS information may be transmitted except for OOK symbols that overlap with the CP.

For stable LP-WUS reception, the LP-WUR may need to find the location of the CP duration of the MR (or the start/end point of the D duration). For this purpose, the UE may be indicated with configuration values such as a numerology configured for the MR. In addition, a separate synchronization signal may be used to accurately find the CP duration (or D duration). Alternatively, the BS may always match the start position of the LP-WUS with the start of the D duration. In this case, the UE may find the D duration (or CP duration included therein) based on the synchronization process for the LP-WUS.

[2-5] It is assumed in Sections [2-3] and [2-4] that the length L_w of the W_pulse is a divisor of N_data (or (N_data - N_cp) or (N_data+ N_cp)) or D. However, the present disclosure is not limited thereto. That is, the length of the W_pulse may be defined/configured separately from these values. In other words, the W_pulse and the LP-WUS based thereon may be generated at a specific time/period different from the OFDM symbol unit of the MR (however, even in this case, the OFDM transmitter chain of the BS may be shared). Since the LP-WUS generated in this way may cause serious interference to the CP duration of the OFDM symbol of the MR, the LR may detect the LP-WUS excluding the corresponding CP duration upon receiving LP-WUS. A separate synchronization signal and synchronization procedure may be required for LP-WUS reception. Alternatively, to simplify the LR structure, the LR may detect the LP-WUS without excluding the corresponding CP duration. In this case, reception performance may be degraded due to interference. However, considering that the LR does not need to detect the CP duration (or D duration) of the MR for reception, the complexity of the LR may be reduced. In addition, regardless of the numerology of the MR, the LR may have the advantage of only having to perform consistent operations. For all CP durations of OFDM symbols that exist within a specific time/period of the received LP-WUS, the LR may perform a series of reception processes, such as envelope detection, only on durations except for all LP-WUS pulses that overlap with the CP. Alternatively, the LR may perform a series of reception processes, such as envelope detection, for the entire specific time/period without consideration of the CP duration of the OFDM symbol within the specific time/period of the received LP-WUS.

Table 5 shows options for LP-WUS waveform generation methods that were agreed upon during the RAN1#112 standardization meeting (February 27 to March 3, 2023).

**[Table 5]**

| |
|---|
| Agreement |
| For MC-ASK waveform generation, where K is size of iFFT of CP-OFDMA, N is number of SCs used by LP-WUS including potential guard-bands, study further |
| • Option OOK-1: Single-bit in 1 OFDM symbol, SCs of LP-WUS are |
| ∘ OOK=1 means all SCs are modulated |
| ∘ OOK=0 means all SCs are zero power (from base-band point of view) |
| ∘ Fig. 5 |
| • Option OOK-2: Parallel M-bit OOK in frequency domain, |
| ∘ N SCs of LP-WUS is further separated into M segments (M=2 in Figure) possibly with guard-bands in-between and/or around |
| ∘ OOK=1 means all SCs in segment are modulated |
| ∘ OOK=0 means all SCs in segment are zero power (from base-band point of view) |
| ∘ FFS architecture |
| ∘ Fig. 6. |
| • Option OOK-3: Multi-tone single-bit OOK |
| ∘ N SCs of LP-WUS is separated into L segments (L=2 on Figure) without guard-bands in-between segment, but possibly around |
| ∘ OOK=1 means 1 sub-carrier (known by UE) of each segment is modulated, rest of SC is zero power (from base-band point of view) |
| ∘ OOK=0 means all SCs in all segments are zero power (from base-band point of view) |
| ∘ FFS architecture |
| ∘ Fig. 7 |
| • Option OOK-4: Transform M-bit OOK in time domain |
| ∘ N SCs of OOK-1 are generated by a transformation (DFT/Least square) |
| ∘ N' samples are generated from M-bits |
| ∘ signal modification may or may NOT be used |
| ∘ truncation or other additional modification may or may NOT be used, if not used, ∘ N is the same as N' |
| ∘ N' can be the same as K |
| ∘ Fig. 8 |
| • FFS modulated SCs are e.g. QAM symbols, sequences or other signals |
| ∘ Companies to report their assumptions |
| • potential guard-band SCs are zero power (from base-band point of view) |
| [optionally, 2 additional segments, one always modulated and one always zero power (from base-band point of view) can be transmitted] |
| • Other options are not precluded (e.g. OOK-1 with multiple bits in one OFDM symbol) |

When Methods 1/2/3 in Section [2-3] are applied to the OOK option in Table 5, some segments of an IFFT output waveform (for example, the last N_cp duration of N_data in Method 3) may change.

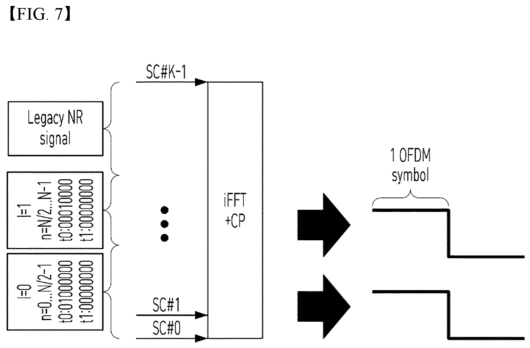

The OOK-4 method may be considered as follows: to transmit an M-bit LP-WUS payload, the M bits are first transformed into M1 bits/samples (by repeating each bit as M0 bits/samples or mapping each bit to an M0-bit/sample sequence). After passing through the 'signal generation and modification' and/or 'DFT/Least Square' blocks shown in FIG. 7, N' bits/samples are generated. Then, N' is truncated to N, and N bits/samples are input into the IFFT.

When Methods 1/2/3 in Section [2-3] are applied to OOK-4, it may be understood that some parts of the M bits, M0 bits/samples, N' bits/samples, or N bits/samples are changed. For example, when Method 3 in Section [2-3] is applied to OOK-4, some parts (e.g., the bits/samples corresponding to the last N_cp duration) of the M bits may be mapped to zero while the M bits are mapped to the M1 bits. Alternatively, specific parts (e.g., the bits/samples corresponding to the last N_cp duration) may be replaced with or copied to other specific parts (e.g., the bits/samples corresponding to the first N_cp duration of N_data).

As another example, the bits/samples corresponding to the last N_cp duration of N_data may be generated to be identical to the bits/samples corresponding to the N_cp duration (which is appended to the front of N_data during the CP insertion process after the IFFT), filled with zeros, or filled with dummy data (which is not parts of the LP-WUS payload). The receiver (e.g., LP-WUR) may remove or puncture parts of the LP-WUS corresponding to the last N_cp duration during the reception process, such as envelope detection (depending on the generation method). Alternatively, the receiver may combine parts of the LP-WUS corresponding to the last N_cp duration with other parts detected in N_data to extract the LP-WUS payload.

When Methods 1/2/3 in Section [2-3] are applied, each W_pulse may be fully modulated across L_w (i.e., having energy), or some bits/samples may remain unmodulated (i.e., have zero energy). For example, in Methods 1/2/3 in Section [2-3], if N W_pulses are mapped during the N_data, (N_data + N_cp), or (N_data - N_cp) duration, each W_pulse may have energy only in half the length of L_w, while the rest may have zero energy. In this case, OOK with energy only in parts of L_w may be referred to as partial OOK. This helps to avoid inter-symbol interference between W_pulses.
- Among the N W_pulses, partial OOK may be applied only to the first and last W_pulses, while the remaining N-2 W_pulses may be fully modulated across the L_w duration.
- Alternatively, partial OOK may be applied to the odd-numbered (or even-numbered) pulses among the N W_pulses, while the even-numbered (or odd-numbered) pulses may be fully modulated across the L_w duration.
- Power boosting may be applied to W_pulses to which partial OOK is applied (in proportional to the reduced pulse length).
- In partial OOK, the modulated segment of L_w (denoted as L_w_1) and the unmodulated segment of L_w (denoted as L_w_2) may have a 1:1 ratio, or the modulated and unmodulated segments may be set to a different ratio. The ratio may be predefined or configured through higher layer signaling such as RRC.
- In partial OOK, the position of the modulated segment within L_w (L_w_1) may be defined to have a length of L_w_1 from the start of L_w, at the end of L_w, or in the middle of L_w. The position of the modulated segment may be predefined or configured through higher layer signaling such as RRC.
- In partial OOK, the length and/or position of the modulated segment within L_w may be configured differently for each cell ID. This may reduce interference between LP-WUSs transmitted from different cells.
- Partial OOK may be applied to some OOK symbols among OFDM symbols.
- The zero segment/position of the OOK symbol may be configured.
- Partial OOK may be used only when transitions occur between OOK symbols.

### [3] LP-WUS structure in frequency domain

[3-1] When an MC-OOK signal is generated, only K subcarriers among NFFT subcarriers may be used for modulating non-zero data or sequences, and the remaining (NFFT - K) subcarriers may not be used for generating the LP-WUS.
- In this case, the (NFFT - K) subcarriers or fewer may be used for signals/channels of the MR (if a guard band is configured at the end of the K subcarriers) or for NR signals/channels for other UEs.

[3-2] In this case, the positions of the K subcarriers may be configured/indicated to the UE via RRC, MAC-CE, or DCI. Alternatively, the positions of the K subcarriers may be configured/indicated to the UE as parts of the LP-WUS payload.
- The position of the lowest or highest subcarrier among the K subcarriers or the position of the middle subcarrier may be configured/indicated.
- Alternatively, based on a reference point, an offset from the reference point may be configured/indicated. In this case, the reference point may be the location of an SSB or CRB0 of the MR. When the UE is in the connected mode, the reference point may be an active BWP. Alternatively, the reference point may be the location of an (initial) BWP or CORESET#0.

In general, the frequency position assigned to the LP-WUS (e.g., PRB index) may be configured/indicated to the UE via RRC, MAC-CE, or DCI. Alternatively, the frequency position may be configured/indicated to the UE as parts of the LP-WUS payload.
- When a plurality of PRBs are allocated to the LP-WUS, the position of the PRB with the lowest or highest index among the plurality of PRBs may be configured/indicated, or the position of the middle PRB may be configured/indicated.
- Alternatively, based on a reference point, an offset from the reference point may be configured/indicated. In this case, the reference point may be the location of an SSB or CRB0 of the MR. When the UE is in the connected mode, the reference point may be an active BWP. Alternatively, the reference point may be the location of an (initial) BWP or CORESET#0.

[3-3] NFFT subcarriers (or the frequency positions assigned to the LP-WUS (e.g., PRB)) may be FDMed and used for a plurality of UEs. In other words, each UE may be configured with different K positions (or frequency positions).
- For example, an RB-level offset or RE-level offset may be predefined or configured through RRC. A different offset may be configured/indicated to each UE.

[3-4] The positions of the K subcarriers (or the frequency positions assigned to the LP-WUS) may be determined within the active BWP of the corresponding MR (if the UE is in the RRC connected state). In other words, the values configured through RRC/MAC-CE may be one of the subcarriers or frequencies (e.g., PRB index) corresponding to the active BWP. If the MR and LR share RF modules, such a configuration method may reduce the power consumption and complexity of the UE.

[3-5] Alternatively, the positions of the K subcarriers (or the frequency positions assigned to the LP-WUS) may be determined outside the active BWP of the corresponding MR (if the UE is in the RRC connected state). In other words, the values configured through RRC/MAC-CE may be one of the subcarriers or frequencies (e.g., PRB index) that are outside the active BWP. When the MR receives an NR signal/channel in the wake-up state, if the LR also operates simultaneously, such a configuration method may serve to separate the frequency resources of the MR and LR.
- The LP-WUS may be configured within the active BWP.
- An LP-SS may be configured outside the active BWP or within the default BWP.

### [4] Hierarchical LP-WUS structure for coverage enhancement

[4-1] For low-power reception using the LP-WUS, the LP-WUR may have a higher noise figure compared to conventional NR OFDM receivers. As a result, the coverage of LP-WUS transmission or LP-WUR reception may be smaller than that of a conventional NR paging PDCCH or PUSCH. When the UE configured with the LP-WUR is out of coverage, the UE may attempt to detect the LP-WUS to wake up the MR (without realizing that the UE is out of the coverage). However, this may not be desirable.

[4-2] To this end, the LP-WUS may be composed of two parts. The first part may be robust enough to achieve similar coverage to conventional NR but may not carry much information. The second part may carry more information but may have smaller coverage than the first part. For example, the first part may be used solely to indicate whether the LP-WUS is transmitted. Alternatively, the first part may include only control information necessary for decoding the second part. For example, if the UE detects the first part of the LP-WUS composed of two parts but fails to detect or decode the second part, the UE may recognize that the UE is in a location or situation where it is difficult to receive the LP-WUS/WUR correctly and then immediately wake up the MR (without further monitoring through the LP-WUR).

[4-3] A UE-specific LP-WUS and a group-common LP-WUS may be defined. In this case, the group-common LP-WUS may be defined/configured to have wider coverage. The UE-specific LP-WUS may be defined/configured to transmit more information. The different configurations may be applied even if both the UE-specific LP-WUS and group-common LP-WUS are generated based on the same waveform. For example, the (aforementioned) W_pulse used to generate the two LP-WUSs may be the same, but a different number of consecutive W_pulses may be used. If the group-common LP-WUS is detected N consecutive times while the UE-specific LP-WUS is not received/detected/decoded, the UE may be configured to immediately wake up the MR.
- If the LP-WUS is not detected while the LP-SS is received N times, the UE may wake up the MR.
- Alternatively, if the UE detects the LP-WUS or LP-SS N times but fails to decode the LP-WUS or LP-SS all, the UE may wake up the MR.

### [5] Synchronization signal for LP-WUS

[5-1]A separate synchronization signal for the LP-WUS (hereafter referred to as LP-SS) may be necessary. The LP-WUR may not require as precise reception synchronization as an OFDM receiver. However, depending on the LP-WUR structure, a specific level of synchronization process may be needed. In addition, if a (low-cost) local oscillator is used for the LR, a (significant) carrier frequency offset may occur. Alternatively, time drift may also occur due to phase or sampling frequency differences between the clock of the LR and the clock of the BS transmitter. Since the LR may not detect/decode signals such as the SSB of the MR, a separate synchronization signal for the LP-WUS/WUR may be introduced for time synchronization of the LR.

[5-2] The LP-SS may be a signal based on the same waveform generation method as that for the LP-WUS (to maintain low complexity for the UE). For example, the LP-SS may be configured based on the W_pulse described above. More specifically, the LP-SS may consist of N consecutive W_pulses, where each n-th W_pulse corresponds to either '1' or '0' (where n = 1, ..., N). If it is referred to as a length-N sequence, one of the sequences commonly used in conventional NR (e.g., ZC sequence) may be used as such a sequence. The aforementioned W_pulse may be used to generate both the LP-WUS and LP-SS, but both the LP-WUS and LP-SS may consist of different numbers of W_pulses. For example, the LP-WUS may be composed of N W_pulses, while the LP-SS may be composed of M W_pulses (where M is, for example, a value greater than N).

[5-3] The LP-SS may be configured in units of X OFDM symbols of the MR. For example, the LP-SS may be defined as having the same length as one OFDM symbol or as a continuous sequence with the same length as X OFDM symbols. In this case, the starting point of the LP-SS may be aligned with the boundary of the OFDM symbol. This alignment may facilitate FDM between the LP-SS and other NR signals/channels within the duration where the LP-SS is transmitted. Alternatively, when FDM between the LP-SS and NR signals/channels is not supported, if the LP-SS with such a structure is used, TDM between the LP-SS and NR signals/channels may be easily accomplished in units of OFDM symbols. In addition, when the LP-SS is used, the LR may find the boundary of the OFDM symbol of the MR based on correlation results with the LP-SS. Accordingly, the synchronization with the LP-WUS signal may be achieved (if the LP-WUS is aligned with the OFDM symbol of the MR).

As a specific example, a single LP-SS may be set to the length of one OFDM symbol of the MR. In this case, a unit signal corresponding to each bit of the LP-SS (e.g., W_pulse) may be defined/set to be the number of samples of the OFDM symbol of the MR (e.g., 2048 samples), the number of samples corresponding to a divisor thereof, or the number of 2^n samples among the divisors. In this case, when the unit signal is repeated, a single LP-SS may be transmitted with the same length as the OFDM symbol of the MR.

Alternatively, the LP-SS may be transmitted as a signal aligned with the subframe of the MR (or a half sub-frame in units of 0.5 ms) (that is, the LP-SS may be aligned with 0.5 ms or multiples thereof even if the LP-SS is not aligned with each OFDM symbol). In this case, if the UE detects the LP-SS through the LR, the UE may synchronize with the MR in units of 0.5 ms or 1 ms.

In this case, as a specific example, the number of 2^n samples may be used as the unit signal corresponding to each bit of the LP-SS (e.g., the aforementioned W_pulse). In addition, a single (i.e., continuously transmitted) LP-SS may be defined/determined by using a plurality of unit signals (e.g., through repetition of the unit signal).
- The details of the LP-SS described in [5-3] may also be applied to the LP-WUS.

However, depending on the structure of the LP-WUR, the LP-SS may not need to be aligned with the OFDM symbol (sub-frame or 0.5-ms half sub-frame) of the MR. The UE may achieve approximate time synchronization with the LP-WUS based on the LP-SS and use the LP-SS solely for time drift compensation.

[5-4] The LP-SS may be transmitted periodically. If the LP-SS is transmitted periodically (i.e., at regular time intervals), the LP-SS may be used for synchronization such as time drift compensation. The periodically transmitted LP-SS may also be used for RRM measurement using the LR at the same time. In this case, the period of the LP-SS may be configured to be the same as or a multiple of the DRX cycle configured for the MR (through RRC). If the group-common LP-WUS is introduced, a group-common LP-SS may be transmitted consecutively before or after the LP-WUS.

[5-5] The LP-SS may be transmitted in a continuous waveform form immediately before each LP-WUS. Alternatively, the LP-SS may be transmitted once every N-th LP-WUS transmission. For example, if the LP-WUS is periodically transmitted in alignment with the DRX cycle of the MR (or at a cycle corresponding to a multiple or divisor of the MR DRX cycle), the LP-SS may also be periodically transmitted at the same cycle, but the LP-SS may also be configured to be transmitted at a different cycle (through RRC or similar means).

[5-6] When the UE is configured with both the group-common LP-WUS and UE-specific LP-WUS, the LP-SS attached before the group-common LP-WUS may be different from the LP-SS attached before the UE-specific LP-WUS. For example, in the case of the group-common LP-WUS, since the group-common LP-WUS needs to be transmitted to unspecified UEs, a relatively longer sequence may be configured considering UEs at the cell edge or UEs with poor channel conditions.

Referring to OOK-1/2/3/4 in Table 5,

The LP-WUS may be generated using the OOK-A method with SCS#1, while the LP-SS may be generated using the OOK-B method with SCS#2. In this case, OOK-A and OOK-B may refer to different methods among OOK-1/2/3/4. SCS#1 and SCS#2 represent different SCSs. For example, the LP-WUS may be generated using the OOK-4 method with an SCS used for NR signals/channels capable of being transmitted (i.e., FDMed) at the same time as the LP-WUS, and the LP-SS may be generated using the OOK-1 method with a larger SCS than SCS#1. When the LP-WUS and LP-SS are configured as described above, the LP-SS (which requires a relatively low data rate) may be expected to have robust performance through OOK-1 transmission, while the LP-WUS may satisfy a relatively higher data rate because the LP-WUS is generated based on the OOK-4 method.

The LP-SS signal may be composed of two different parts. These two parts may be concatenated and thus continuously transmitted. In this case, the first part may be generated using the OOK-A method with SCS#1, and the second part may be generated using the OOK-B method with SCS#2. For example, the first part of the LP-SS signal may be generated using the OOK-1 method with a larger SCS than that used for NR signals and thus used for coarse synchronization of the LP-WUR. The second part of the LP-SS may be generated using the OOK-4 method with the same SCS as NR signals and thus used for fine synchronization of the LP-WUR. Even if the LP-SS is transmitted as two concatenated parts, some UEs may use only one part for synchronization. For instance, when the first part is generated with OOK-1 and the second part is generated with OOK-4 as in the above example, UE#1 may receive both the first and second parts for synchronization of the LP-WUR, UE#2 (capable of receiving only OOK-1) may use only the first part for synchronization of the LP-WUR, and UE#3 (capable of receiving only OOK-4) may use only the second part for synchronization of the LP-WUR.

When the LP-SS is composed of the two parts as described above, the first and second parts may be generated using the same sequence. Alternatively, the first and second parts may be generated differently based on the same sequence. Specifically, for OOK-1, the same sequence may be used without repetition, but for OOK-4, the same sequence may be repeated X times. Alternatively, a sequence obtained by phase rotating each sample of a sequence used in OOK-1 may be used to generate OOK-4. For example, the first part may be generated as an OOK-1 waveform using sequence#1 with a length of N, and the second part may be generated as an OOK-4 waveform by repeating sequence#1 X times.

The present disclosure is not limited to transmission and reception of UL and/or DL signals. For example, the present disclosure may also be used for direct communication between UEs. In addition, the term "BS" in the present disclosure may include a relay node as well as a base station. For example, the operations of the BS described in this document may be performed by base stations, but the operations may also be performed by relay nodes.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

### Implementation Examples

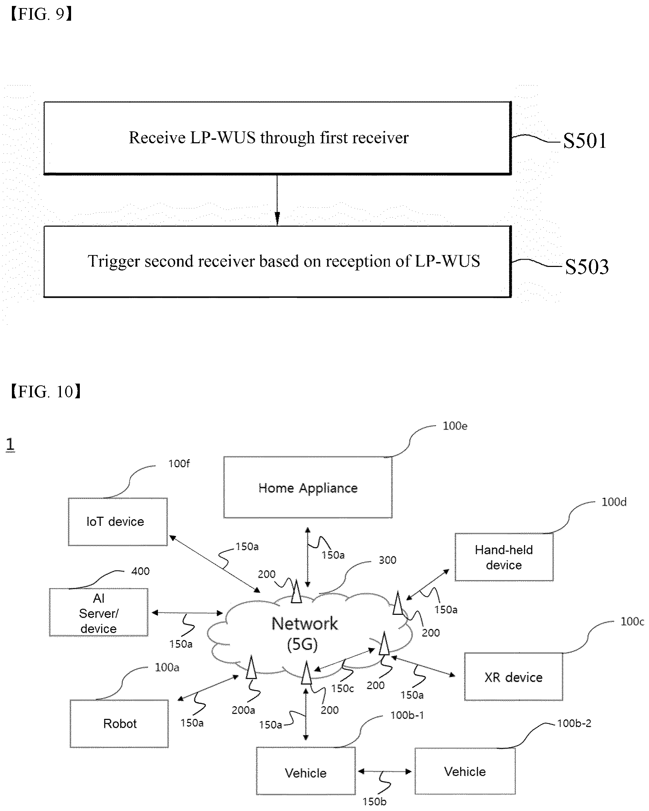

FIG. 9 is a flowchart of a signal transmission and reception method according to embodiments of the present disclosure.

Referring to FIG. 9, the signal transmission and reception method according to the embodiments of the present disclosure may be performed by a UE. The method may include receiving an LP-WUS through a first receiver (S501) and triggering a second receiver based on the reception of the LP-WUS (S503).

In FIG. 9, triggering the second receiver may mean activating (waking up) the second receiver. When the second receiver is not activated, the second receiver may be in an ultra-deep sleep state. The ultra deep sleep state means that most circuits of the second receiver (or more than a certain percentage of all circuits) are turned off. Alternatively, when the second receiver is not activated, the second receiver may be in a deep sleep or light sleep state, where the circuits are not turned off but the second receiver does not monitor DL signals such as a PDCCH.

In addition to the operations of FIG. 9, one or more of the operations described in Sections [1] to [5] may be also performed.

Specifically, referring to the content of Section [2] (particularly Section [2-3] and [2-4]), the length L_w of one OOK symbol of an LP-WUS is determined based on (i) the length N_ofdm of an OFDM symbol, (ii) the length N_cp of a CP duration of the OFDM symbol, and (iii) a number N of OOK symbols corresponding to the length of the OFDM symbol. In Sections [2-3] and [2-4], L_W is defined as the length of the W_pulse, but referring to Section [1-4], since the W_pulse is generated through Manchester coding of a OOK symbol duration, the length of the W_pulse may be the same as the length of the OOK symbol. The number of OOK symbols corresponding to the length of the OFDM symbol may be equal to the number of bits transmitted in OOK symbols within a time duration corresponding to the length of the OFDM symbol.

Referring to Section [2-2], the OOK symbol may be transmitted using only some OFDM subcarriers, and an unused band may be used for signals/channels in the conventional NR system. Referring to Table 5, for multiplexing the LP-WUS with conventional signals/channels, the IFFT size of CP-OFDM (or CP-OFDMA) and the number of subcarriers used by the LP-WUS may be considered. The first receiver may not perform a FFT on the received signal to reduce power consumption. If the LP-WUS is multiplexed with the conventional signals/channels, interference between the LP-WUS and other signals/channels may occur due to the CP duration of the conventional signals/channels.

In Sections [2-3] and [2-4], disclosed is a specific OOK symbol structure for mitigating interference that may be caused by multiplexing.

Referring to Method 1 in Section [2-3], L_w corresponds to a value obtained by dividing N_data by N, where N_data is a length obtained by excluding N_cp from N_ofdm. According to Method 1, as shown in Option A of FIG. 4, a time duration obtained by excluding a duration corresponding to the length of CP duration from a duration corresponding to the length of the OFDM symbol may be divided into N equal segments.

Referring to Method 2 in Section [2-3], L_w corresponds to a value obtained by dividing a result of subtracting N_cp from N_data by N, where N_data is a length obtained by excluding N_cp from N_ofdm. According to Method 2, as shown in Option D of FIG. 4, a time duration obtained by excluding a duration equivalent to twice the length of the CP duration from a duration corresponding to the length of the OFDM symbol may be divided into N equal segments.

Referring to Method 3 in Section [2-3], L_w corresponds to a value obtained by dividing a result of subtracting N_cp from N_data by N, where N_data is a length obtained by excluding N_cp from N_ofdm. In Method 3, L_w is also equal to a value obtained by dividing N_ofdm by N. According to Method 3, as shown in Option C of FIG. 4, a time interval corresponding to the length of the OFDM symbol is divided into N equal segments. In this case, the foremost segment in the time domain among the N segments includes the CP duration, which may cause performance degradation. Therefore, the data for the LP-WUS may be included only in a time duration obtained by excluding a specific length of X from a time duration corresponding to the sum of N_data and N_cp (or corresponding to N_ofdm). X may be one of the N segments that includes the CP duration. Alternatively, X may include one of the N segments that includes the CP duration and one or more segments contiguous to the segment. If a single CP duration overlaps with multiple segments among the N segments, X may include all segments among the N segments that partially or entirely overlap with the CP duration in the time domain.

Referring to Section [2-4], L_w may correspond to a value obtained by dividing a specific duration D, which includes a plurality of OFDM symbols and a plurality of CP durations, by the number N_D of OOK symbols corresponding to D, where N_D refers to the number N of bits transmitted through LP-WUS during the specific duration D as described in Section [2-4], and D may be a period including a long CP. According to the conventional 3GPP communication system, when the normal CP is used, a short CP may correspond to 144κ·2^-µ, and a long CP may be 144κ·2^-µ+16κ, where κ is a constant and corresponds to 64. In addition, µ refers to a numerology applied to the OFDM symbol, and 15*2^µ is an SCS value. The long CP is inserted when the OFDM symbol index is 0 and 7·2^µ, which may have a period of 0.5 ms. Therefore, when D is set to 0.5 ms or a multiple thereof, if the first receiver performs envelope detection on the LP-WUS, the first receiver may omit a process of accurately finding the duration where the long CP is located, thereby reducing the reception complexity of the LR.

In FIG. 9, the first receiver corresponds to a separate receiver (i.e., LP-WUR) that receives the LP-WUS, and the second receiver corresponds to a conventional NR receiver (i.e., MR). The specific names may be changed to something other than the LP-WUR and MR, but the first receiver is designed to consume relatively less power than the second receiver.

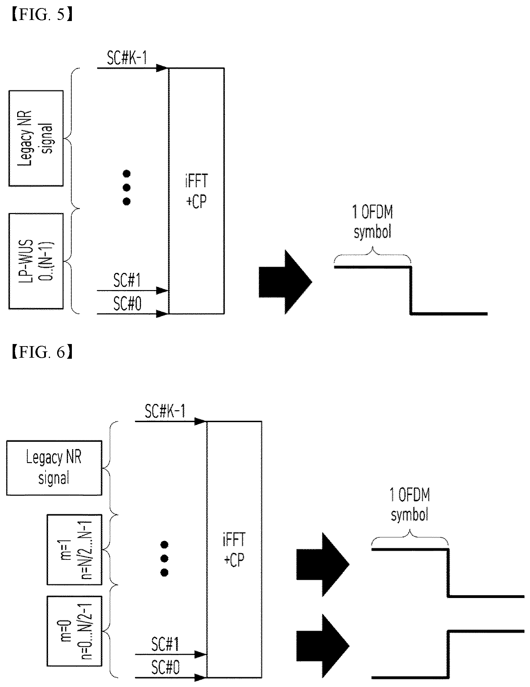

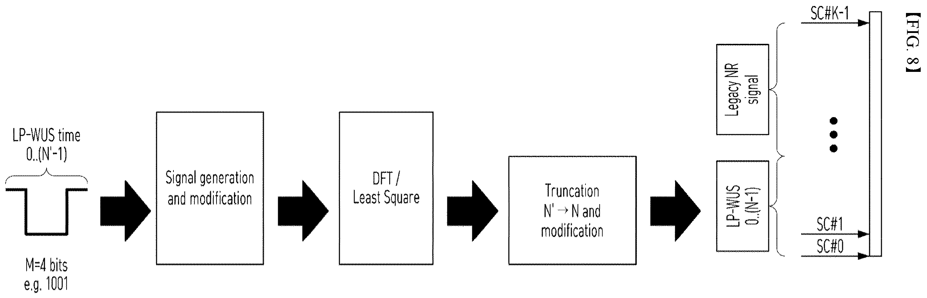

In addition to the operations of FIG. 9, one or more of the operations described with reference to FIGS. 1 to 8 and the operations described in Sections [1] to [5] may be also performed in combination.

For example, the structure of the LP-WUS in the frequency domain in FIG. 9 may be generated based on Section [3]. The LP-WUS in FIG. 9 may be composed of two parts based on Section [4]. The synchronization signal for the LP-WUS in FIG. 9 may be configured based on Section [5].

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 10 illustrates a communication system 1 applied to the present disclosure.

Referring to FIG. 10, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

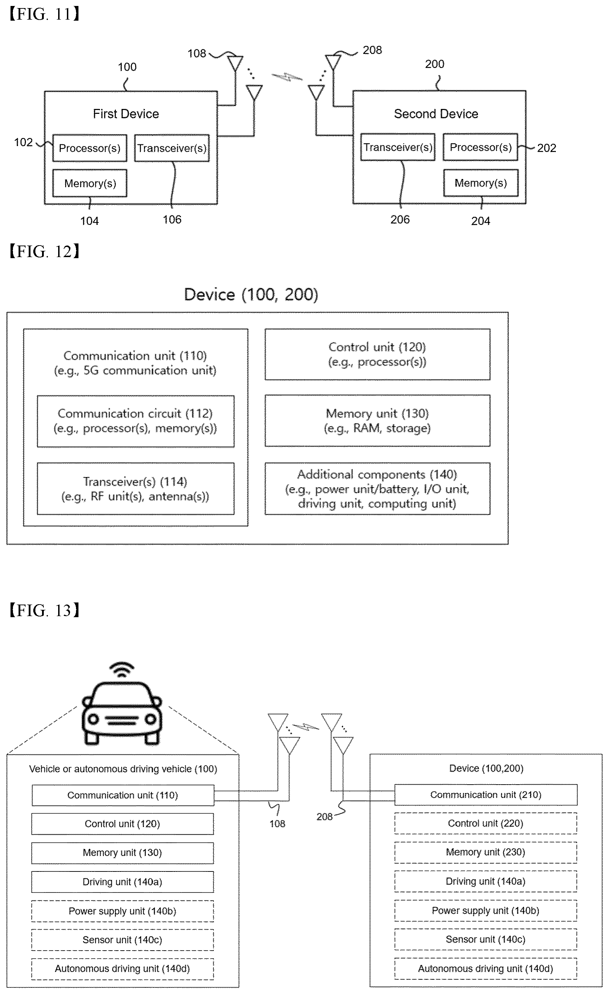

FIG. 11 illustrates wireless devices applicable to the present disclosure.

Referring to FIG. 11, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 10.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

FIG. 12 illustrates another example of a wireless device applied to the present disclosure. The wireless device may be implemented in various forms according to a use case/service (refer to FIG. 10).

Referring to FIG. 12, wireless devices 100 and 200 may correspond to the wireless devices 100 and 200 of FIG. 11 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 11. For example, the transceiver(s) 114 may include the one or more transceivers 106 and 206 and/or the one or more antennas 108 and 208 of FIG. 11. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 10), the vehicles (100b-1 and 100b-2 of FIG. 10), the XR device (100c of FIG. 10), the hand-held device (100d of FIG. 10), the home appliance (100e of FIG. 10), the IoT device (100f of FIG. 10), a digital broadcasting terminal, a hologram device, a public safety device, an MTC device, a medical device, a FinTech device (or a finance device), a security device, a climate/environment device, the AI server/device (400 of FIG. 10), the BSs (200 of FIG. 10), a network node, or the like. The wireless device may be mobile or fixed according to a use case/service.

In FIG. 12, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 13 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 13, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 12, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method of transmitting and receiving signals by a user equipment (UE) in a wireless communication system, the method comprising:
receiving a low-power wake-up signal (LP-WUS) through a first receiver of the UE; and
triggering a second receiver of the UE based on the reception of the LP-WUS,
wherein a length L_w of an on-off keying (OOK) symbol of the LP-WUS is determined based on (i) a length N_ofdm of an orthogonal frequency division multiplexing (OFDM) symbol, (ii) a length N_cp of a cyclic prefix (CP) duration of the OFDM symbol, and (iii) a number N of OOK symbols corresponding to the length of the OFDM symbol.

2. The method of claim 1, wherein L_w corresponds to a value obtained by dividing N_data by N, and
wherein N_data is a length obtained by excluding N_cp from N_ofdm.

3. The method of claim 1, wherein L_w corresponds to a value obtained by dividing a result of subtracting N_cp from N_data by N, and
wherein N_data is a length obtained by excluding N_cp from N_ofdm.

4. The method of claim 1, wherein L_w corresponds to a value obtained by dividing a sum of N_data and N_cp by N, and
wherein N_data is a length obtained by excluding N_cp from N_ofdm.

5. The method of claim 4, wherein data for the LP-WUS is included only in a time duration obtained by excluding a specific length of X from a time duration corresponding to the sum of N_data and N_cp, and
wherein X is a minimum value among multiples of L_W that are not smaller than the CP duration.

6. The method of claim 1, wherein L_w corresponds to a value obtained by dividing a length D of a specific duration including a plurality of OFDM symbols and a plurality of CP durations by a number N_D of OOK symbols corresponding to D,
wherein D is a period including a long CP or a multiple of the period,
wherein the period is 0.5 milliseconds.

7. The method of claim 1, wherein the first receiver consumes relatively less power than the second receiver.

8. The method of claim 1, wherein L_w is determined based on (i) a size of an inverse fast Fourier transform (IFFT) of cyclic prefix orthogonal frequency division multiplexing (CP-OFDM) and (ii) a number of subcarriers used by the LP-WUS.

9. A user equipment (UE) configured to transmit and receive signals in a wireless communication system, the UE comprising:
at least one transceiver;
at least one processor; and
at least one memory operably connected to the at least one processor and configured to store instructions that, when executed, cause the at least one processor to perform specific operations comprising:
receiving a low-power wake-up signal (LP-WUS) through a first receiver of the UE; and
triggering a second receiver of the UE based on the reception of the LP-WUS,
wherein a length L_w of an on-off keying (OOK) symbol of the LP-WUS is determined based on (i) a length N_ofdm of an orthogonal frequency division multiplexing (OFDM) symbol, (ii) a length N_cp of a cyclic prefix (CP) duration of the OFDM symbol, and (iii) a number N of OOK symbols corresponding to the length of the OFDM symbol.

10. An apparatus for a user equipment (UE), the apparatus comprising:
at least one processor; and
at least one computer memory operably connected to the at least one processor and configured to, when executed, cause the at least one processor to perform operations comprising:
receiving a low-power wake-up signal (LP-WUS) through a first receiver of the UE; and
triggering a second receiver of the UE based on the reception of the LP-WUS,
wherein a length L_w of an on-off keying (OOK) symbol of the LP-WUS is determined based on (i) a length N_ofdm of an orthogonal frequency division multiplexing (OFDM) symbol, (ii) a length N_cp of a cyclic prefix (CP) duration of the OFDM symbol, and (iii) a number N of OOK symbols corresponding to the length of the OFDM symbol.

11. A computer-readable non-volatile storage medium having at least one computer program configured to cause a user equipment (UE) having at least one processor to perform operations comprising:
receiving a low-power wake-up signal (LP-WUS) through a first receiver of the UE; and
triggering a second receiver of the UE based on the reception of the LP-WUS,
wherein a length L_w of an on-off keying (OOK) symbol of the LP-WUS is determined based on (i) a length N_ofdm of an orthogonal frequency division multiplexing (OFDM) symbol, (ii) a length N_cp of a cyclic prefix (CP) duration of the OFDM symbol, and (iii) a number N of OOK symbols corresponding to the length of the OFDM symbol.
